# EUROPEAN PATENT SPECIFICATION

(11) **EP 0 363 444 B1**
(45) Date of publication and mention of the grant of the patent: **27.12.1996**
(21) Application number: 88910138.2
(22) Date of filing: 02.11.1988
(51) Int. Cl.: E01C 19/17, F16K 41/08, B05B 1/32

(54) **Valve for tar-sprayer**
Ventil für Teerspritzeinrichtung
Vanne pour pulvérisateur à goudron

(30) Priority: 03.11.1987 NL 8702618
(43) Date of publication of application: 18.04.1990
(73) Proprietor: BURGGRAAFF, Teunis, NL-4124 AS Hagestein (NL)
(72) Inventor: BURGGRAAFF, Teunis, NL-4124 AS Hagestein (NL)
(86) International application number: NL8800046
(87) International publication number: WO8904399

(56) References cited:
- EP-A- 0 116 704
- DE-C- 828 028
- GB-A- 2 148 150
- US-A- 4 126 321

## Description

The invention regards a needle valve with spray nozzle for spraying hot tar or bituminous liquids on roads. For this purpose the spray-nipple is also the seating of the valve. The valve-needle is activated by compressed air in an pneumatic cylinder with returning spring. The sealing of the valve-needle to the pneumatic cylinder is guaranteed by means of a flexible sleeve.

An example of a tarspray is to be found in the European patent application EP-A-116704. This tarspray is equipped with a pneumatic cylinder and a return spring. However this type of tarspray requires a seal between housing and valve spindle and it has been proven that a sliding spindle seal as is used in this application in the environment of hot tar will not work for a resonable time. U.S. patent US-A-4126321 describes a seal in the form of a bellows made out of thin polytetrafluorethylene which is fastened on both sides. It is found that these thin walled bellows are easily damaged by lumps of tar when the installation is put into operation. The advantage of having valves on the spray-bar against a central valve in the tar container is that the quantity of tar or liquid that drips out of the nozzle after closing the valve is minimal. The invention aims at providing a valve with a valve-needle seal with a long life and in such a way combined with a spray-nozzle that only a minimal quantity (some drops) leaks out after closing, while the pneumatic operation guarantees a reliable and quick respons to the controls.

The tar-spray is mounted onto a hollow bar (1) in which the hot tar flows under pressure (2). The spray nozzle (3) is mounted in valve-ring (4) which is fastened in a plug (5) welded on bar (1). At the other side of bar (1) a plug (6) is welded which is placed in-line with plug (5). In plug (6), a pneumatic cylinder (7) is fastened. Integrated with the bottom (8) is a threaded part (9) with extension (10). Through the bottom (8) travels the piston rod (11) which is fixed at one side in the piston (12) and which is at the other side (13) bulb-shaped and can shut off opening (14) in valve-ring (4) as a needle-valve. In the piston rod (11) a groove (15) can be found. The piston rod (11) is pushed onto the valve-ring (4) by the force of spring (16). Through connection (17) it is possible to lift the piston rod (11) by means of compressed air. The lifting is limited by adjusting-screw (18), secured by nuts (19). Connection (20) serves as an outlet to the open air of the space above the piston. This outlet can be fitted with a filter to prevent dust and tar mist to be sucked-in when the valve closes.

Piston rod (11) is led through the bottom (8) of the pneumatic cylinder (7). Around extension (10) with groove (21) is sleeve (22) fastened with clamp (23). The other end of sleeve (22) is tightly fastened to piston rod (11) and is secured with a clamp (24) at the position of groove (15). The sleeve (22) is made of heat resistant and flexible material like Viton or siliconrubber. The connection of the sleeve (22) to the extension (10), which slightly differs in diameter with the piston rod (11), and the connection of the sleeve (22) to the piston rod (11) are liquid tight. Sleeve (22) cannot move because the clamps (23) and (24) are placed at the position of the grooves (15) and (21). When the spray is opened by compressed air, sleeve (22) will be slightly compressed. Because the lifting is limited to a few millimeters, the elastic distortion remains small. Because the valve-ring (4) is mounted in bar (1), through which flows the hot tar (2), is in this way obtained a highly reliable shut-off tar-spray for hot tar or bituminous liquids. Because there are no means that the tar can reach the conduit of piston rod (11), the chance of leakage to the cylinder (7) and of blocking the piston (12) is impossible.

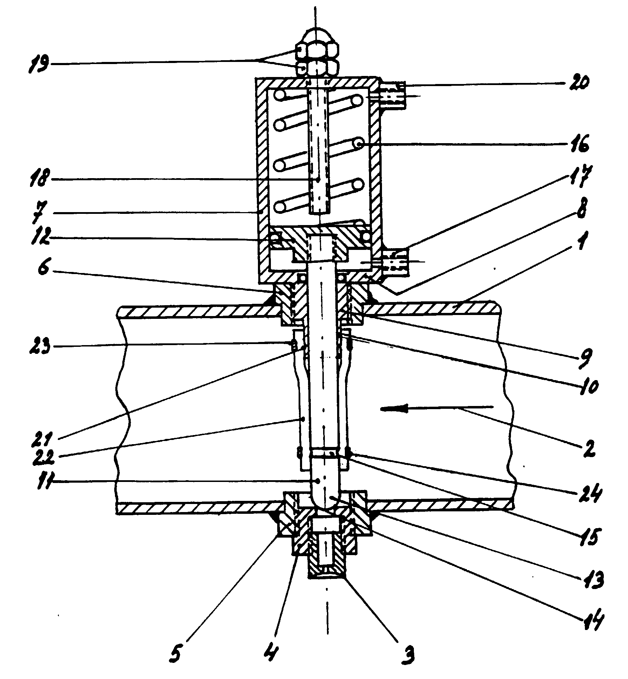

## Claims

1. Needle-valve actuated by a piston (12) inside a cylinder (7) and return spring (16) where the piston rod (11), which functions as valve needle, travels through the cylinder bottom (8) by means of a needle-conduit (9, 10) protruding into the hot tar or bituminous liquid conduit (1) combined with a spray nozzle (3) for spraying hot tar or bituminous liquids where said needle-conduit (9, 10) carries a seal preventing hot tar or bituminous liquids entering the needle-conduit (9, 10) characterized in that the seal between the needle-conduit (9, 10) and the piston rod (11) consists of a close-fitting sleeve (22), made of a heat-resistent flexible synthetic material, which is at one side attached to the needle (11) and at the other side attached to a protruding concentric part of the needle-conduit (9, 10).

## Patentansprüche

1. Ventil für Teerspritzeeinrichtung aktiviert mittels ein Kolben (12) innerhalb ein Zylinder (7) und ein Rückstellfeder (16) wobei der Kolbenstange (11), der funktioniert wie Ventilnadel, führt durch der Zylinderboden (8) mittels ein Nadeldurchgang (9, 10) der innerhalb der heizes Teer oder bitumeuze Flüssichkeits Leitung (1) vorspringt zusammengefast mit ein Spritzeinrichtung (3) zum spritzen von heizer Teer oder Bitumeuze Flüssigkeiten wobei genannte Nadeldurchgang (9, 10) ein Dichtung tragt daß vorbeugt daß keine Teer oder Bitumeuze Flüssigkeit der Nadeldurchgang (9, 10) hereinkommt karakterisiert in daß der Dichtung zwischen der Nadeldurchgang (9, 10) und der Kolbenstange (11) besteht aus ein fast genau passender Hülse (22), gefertigt aus hitzebeständige flexibele Kunststoff, der an der eine Seite befestigt ist an der Nadel (11) und an der andere Seite ist befestigt an einen vorspringenden konzentrischen Teil der Nadeldurchgang (9, 10).

## Revendications

1. Vanne pour pulvérisateur à goudron activée par un piston (12) dans une cylindre (7) et une ressort de retour (16) pendant que la tige de piston (11), qui fonctionne comme une aiguille de vanne, passe par le fond de la cylindre (8) au moyen d'une conduit-aiguille (9, 10) saillissant dans le conduit pour goudron chaud ou liquide bitumineuse (1) est combiné avec une duse (3) pour pulvériser le goudron chaud ou liquide bitumineuse ladite conduit-aiguille (9, 10) supportant une garniture d'étanchéité prévenant l'entrée de goudron chaud ou liquide bitumineuse dans la conduit-aiguille (9, 10) caracterisé par que la garniture d'étanchéité entre la conduite-aiguille (9, 10) et la tige de piston (11) consiste d'une douille bien juste (22), fabriqué de matériaux synthetiques, flexible, résistant au chaleur, quelle est attacher à une coté par l'aiguille et à l'autre coté attacher à une partie saillant et concentrique de la conduit-aiguille (9, 10).
